# FASCICULE DE BREVET EUROPEEN

(11) **EP 1 130 929 B1**
(45) Date de publication et mention de la délivrance du brevet: **13.08.2003**
(21) Numéro de dépôt: 01400406.3
(22) Date de dépôt: 15.02.2001
(51) Int. Cl.: H04Q 3/00, H04L 12/66, H04M 7/00, H04Q 7/20

(54) **Passerelle serveur d'établissement d'une connexion entre un réseau de données et un réseau de téléphonie**
Gateway zwischen einem Datennetz und einem Dienstenetz
Gateway between a data network and a service network

(30) Priorité: 18.02.2000 FR 0001991
(43) Date de publication de la demande: 05.09.2001
(73) Titulaire: SAGEM S.A., 75015 Paris (FR)
(72) Inventeur: Fourre, Frédéric, 75013 Paris (FR)
(74) Mandataire: Schmit, Christian Norbert Marie

(56) Documents cités:
- EP-A- 0 789 470
- EP-A- 0 841 831
- WO-A-97/16007
- WO-A-97/31491
- WO-A-99/12329
- THOM G A: "H. 323: THE MULTIMEDIA COMMUNICATIONS STANDARD FOR LOCAL AREA NETWORKS" IEEE COMMUNICATIONS MAGAZINE,US,IEEE SERVICE CENTER. PISCATAWAY, N.J, vol. 34, no. 12, 1 décembre 1996 (1996-12-01), pages 52-56, XP000636454 ISSN: 0163-6804

## Description

La présente invention a pour objet un serveur d'établissement d'une connexion entre un réseau de données et un réseau de téléphonie. Elle a aussi pour objet un procédé de fonctionnement associé. Cette invention s'applique essentiellement au domaine de la téléphonie et de la visiophonie, notamment de la téléphonie mobile. Le but de l'invention est essentiellement d'interconnecter deux utilisateurs de deux réseaux de téléphonie par l'intermédiaire d'un serveur de données et de gérer le passage d'un téléphone d'un appareil de téléphonie d'un réseau à l'autre.

Ces deux réseaux peuvent éventuellement être séparés par un réseau de transmission de données tel que le réseau Internet par exemple voire par une liaison privée. On parlera plus généralement d'un réseau de type IP (Internet Protocol pour protocole Internet) c'est à dire un réseau dont un protocole de communication utilise le protocole IP. De préférence, les réseaux de téléphonie sont des réseaux d'entreprise c'est-à-dire des réseaux pouvant comporter jusqu'à quelques centaines voire milliers d'utilisateurs et donc d'appareils de téléphonie associés.

Actuellement, il est connu d'utiliser le réseau Internet comme support de communication à une liaison de téléphonie fixe ou mobile. Dans cette réalisation, un réseau de téléphonie fixe ou mobile est relié au réseau Internet en passant par un fournisseur d'accès ou ISP ( pour Internet Service Provider en anglais) ou en utilisant une liaison dite privée pour laquelle une utilisation est soumise au paiement d'une redevance. Ainsi, deux appareils de téléphonie sont généralement connectés via une liaison point à point, chaque appareil étant identifié, et identifiable, par un numéro d'accès au réseau Internet et plus généralement au réseau IP.

Ces réalisations présentent des problèmes. En effet, passer par une liaison privée augmente sensiblement le coût d'une communication. En général, une liaison privée permet d'interconnecter un réseau de téléphonie dans un premier pays avec un réseau de téléphonie dans un deuxième pays. Une réalisation mettant en oeuvre un ISP présente aussi des problèmes. Pour pouvoir être connecté au réseau Internet, il est nécessaire que les deux utilisateurs envoient une requête de demande d'établissement d'une connexion avec le réseau Internet. Ensuite seulement, une communication peut être établie entre ces deux utilisateurs. Il arrive que ces deux utilisateurs ne soient pas reliés à un ISP. Ainsi, il sera nécessaire de fournir un jeu de paramètres de connexion à cet utilisateur. Tout ceci prend du temps et coûte cher. Ces réalisations sont donc coûteuses et/ou compliquées à mettre en oeuvre.

Le document WO 99/12329 décrit un système de télécommunication dans lequel peuvent circuler à la fois des signaux de données et des signaux de téléphones numériques. Ce système comporte une passerelle insérée dans le réseau de transmission de données.

La présente invention a pour objet de remédier à ces problèmes en proposant un dispositif permettant d'assurer l'interconnexion entre le réseau IP et un réseau de téléphonie et ce de manière automatique. Pour cela, on ajoute un serveur qui va gérer, à l'aide du procédé de l'invention notamment, les spécificités des appareils de téléphonie dont il possède une information d'identification. Ces spécificités ont pour objet principalement la mobilité dans le cas d'appareils de téléphonie mobile. L'invention propose en outre un procédé permettant de gérer cette interconnexion. Dans l'invention, ce serveur est vu par le réseau IP comme une passerelle. C'est à dire que le serveur agit comme un filtre entre un premier réseau et un deuxième réseau.

Cela a pour conséquence de réduire notablement des échanges protocolaires entre le serveur et le réseau IP afin d'établir un lien de communication. En effet, un serveur du réseau IP n'a plus qu'à envoyer une requête au serveur de l'invention qui envoie alors une réponse indiquant si l'appelé est de son ressort. Dans le cas contraire, l'appelé est rattaché à une autre passerelle. Le réseau de téléphonie est ainsi vu par le réseau IP ou plus généralement par le réseau de transmission de données comme un réseau de données tel qu'il en existe habituellement relié au réseau IP. Ainsi, l'invention a pour but de banaliser une interconnexion entre un réseau de transmission de données et un réseau de téléphonie.

La présente invention a donc pour objet une passerelle serveur de données, caractérisée en ce que, lors d'une demande d'appel, elle est connectée d'une part à un réseau de transmission de données et d'autre part à un réseau de téléphonie mobile par l'intermédiaire d'une interface, cette passerelle comportant des moyens de commutation permettant d'assurer des fonctions de commutations et comportant un annuaire permettant de déterminer à quel réseau de téléphonie un appareil de téléphonie est associé.

Elle a également pour objet un procédé d'établissement d'une communication, à travers un réseau de transmission de données, à destination ou en provenance d'un premier appareil d'un premier réseau de téléphonie caractérisé en ce que :
- on relie le réseau de transmission de données et un réseau de téléphonie, dont le premier réseau, à une passerelle serveur de données,
- on identifie la passerelle serveur par un numéro d'accès, ce numéro d'accès étant le seul connu par le réseau de transmission,
- on identifie, dans la passerelle serveur, un réseau de téléphonie par un numéro d'accès servant d'identifiant de ce réseau, le premier réseau étant identifié par un premier numéro d'accès,
- on mémorise, dans une mémoire de sauvegarde de la passerelle serveur, un annuaire permettant d'établir une liaison avec un appareil, l'annuaire permettant au moins d'associer un identifiant de l'appareil et le numéro d'accès du réseau de téléphonie auquel il est relié.

L'invention sera mieux comprise à la lecture de la description qui suit et à l'examen de la figure qui l'accompagne. Celle-ci n'est présentée qu'à titre indicatif et nullement limitatif de l'invention. La figure montre :

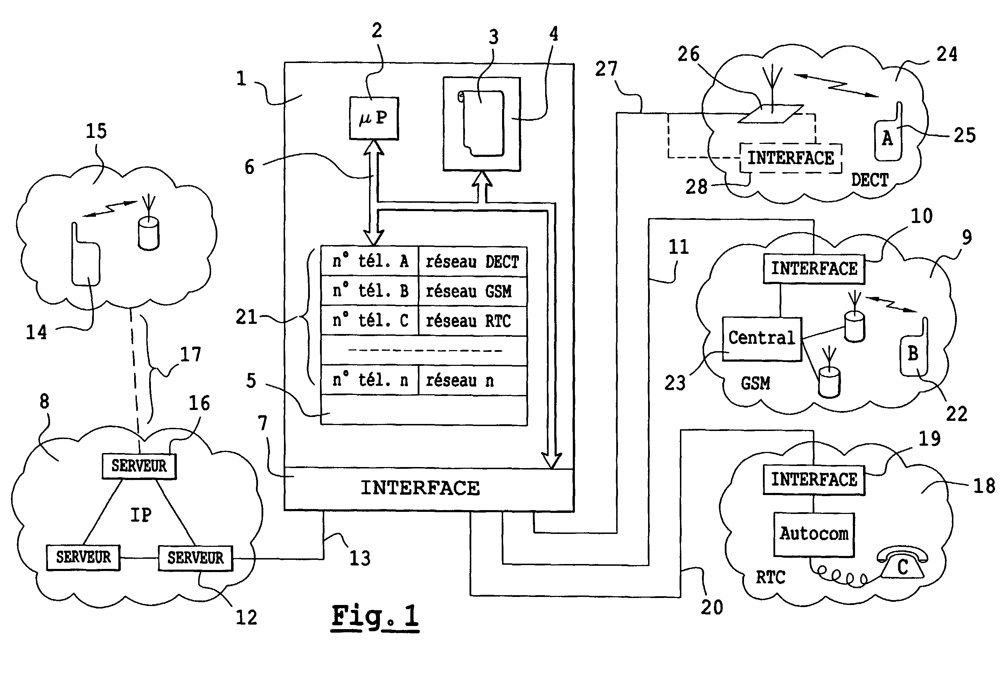

- Figure 1 : une représentation symbolique d'une architecture mettant en oeuvre le dispositif de l'invention.

La figure 1 montre une passerelle serveur, appelée aussi serveur 1, selon l'invention. Ce serveur 1, représenté de manière symbolique, comporte un microprocesseur 2 commandé par un programme 3 dans une mémoire de programme 4, une mémoire 5 de données et/ou de sauvegarde et un bus 6 de données, d'adresses et de commande. Le serveur 1 comporte en outre un moyen 7 d'interface ou interface 7 permettant une connexion à d'autres systèmes et ainsi établir des connexions entre eux. De plus, le serveur de données comporte des moyens permettant d'assurer des fonctions de commutation telles que celles généralement réalisées par un commutateur habituellement employé dans un réseau de transmission de données, une fonction de commutation étant l'acheminement d'un signal d'une entrée d'arrivée vers une sortie parmi plusieurs.

Ainsi, le serveur 1 est connecté, dans l'invention, d'une part à un réseau 8 de transmission de données et d'autre part à un premier réseau 9 de téléphonie. Ce réseau 9 comporte une interface 10 reliée à l'interface 7 par une liaison 11, cette interface 10 étant utilisée comme point d'entrée sortie avec le réseau 9. En outre, le réseau 8 est muni d'un ensemble de serveurs interconnectés en suivant généralement une architecture de type maillé. L'interface 7 est reliée à un de ces serveurs, par exemple un serveur 12. Cette interconnexion forme ainsi un lien 13 de communication entre le serveur 1 et le serveur 12. Un rôle du serveur 1 est d'assurer l'établissement d'une liaison de communication entre le réseau 9 et le réseau 8. Dans l'invention, le serveur 1 se comporte, lors des requêtes, comme une passerelle par rapport au réseau 8, c'est-à-dire que le réseau 8 émet et/ou reçoit des requêtes à destination ou en provenance du serveur 1 respectivement sans avoir d'information concernant les réseaux en avals du serveur 1. En effet, seules les requêtes d'établissement et de coupure de communication (signalisation) passent pas le serveur 1, les paquets contenant la voix numérisée passant directement de l'interface 10, 19 ou 28 des réseaux 9, 18 ou 24 au réseau 8. En outre, le serveur 1 se comporte, lors des requêtes, comme un point d'accès, identifié par un numéro d'accès, du réseau 8 par rapport au réseau 9. En effet dès lors qu'un utilisateur du réseau 9 veut utiliser le réseau 8 comme support de communication alors il émet sa demande d'appel à destination du serveur 1 qui se charge alors d'établir la communication avec le réseau 8, la demande d'appel transitant alors à travers le réseau 8 afin de trouver à quel serveur est connecté l'appelé.

Dans un exemple, on considère que l'appelé est un téléphone 14 d'un réseau 15 de téléphonie et que ce réseau 15 est relié à un serveur 16 du réseau 8 par l'intermédiaire d'un moyen 17 de connexion. Ce moyen 17 peut être un moyen selon l'état de la technique tel qu'une liaison privée ou alors peut être un serveur tel que le serveur 1 de l'invention. Ainsi, cette demande d'appel est transmise au téléphone 14 par l'intermédiaire du serveur 16 qui a établi une communication avec le réseau 15 par l'intermédiaire du moyen 17.

Dans un exemple préféré, l'interface 7 est relié à un deuxième réseau 18 de téléphonie par le biais d'une deuxième interface 19, une liaison entre l'interface 7 et l'interface 19 formant un lien 20. En outre, le serveur 1 comporte, selon l'invention, un annuaire 21 permettant de déterminer à quel réseau de téléphonie un appareil de téléphonie est associé. Généralement, un appareil de téléphonie est simplement un téléphone. Mais ce pourrait très bien être un ordinateur ou tout autre système pouvant se connecter à un réseau de téléphonie afin de transmettre des informations.

Cet annuaire 21 permet de répertorier notamment des identifiants des réseaux reliés au serveur 1. En effet, un réseau de téléphonie est identifié par un numéro d'accès servant d'identifiant de ce réseau, le réseau 9 étant identifié par un premier numéro d'accès. Ainsi, un téléphone, par exemple un téléphone 22, connecté à ce réseau 9 sera associé dans l'annuaire 21 à l'identifiant du réseau 9. En conséquence, lorsque le serveur 1 reçoit une requête de demande d'appel à partir du réseau 8, par exemple du téléphone 14, alors le microprocesseur 2 recherche dans l'annuaire 21 le numéro de téléphone de l'appelé afin de déterminer à quel réseau de téléphonie l'appelé est connecté. Une fois cet identifiant de réseau déterminé le microprocesseur 2 commande l'interface 7 afin d'établir une connexion entre le lien 13 et le lien 11 ou 21 selon le réseau déterminé. Dans un exemple, si l'appelé est le téléphone 22 alors le microprocesseur 2 commande une connexion entre le lien 13 et le lien 11. Dans un exemple préféré, l'annuaire 21 est mémorisé dans la mémoire 5 mais pourrait très bien être mémorisé dans toute autre mémoire de sauvegarde du serveur 1.

En outre, le serveur 1 est identifié par un numéro d'accès, ce numéro d'accès étant le seul connu par le réseau de transmission afin d'accéder à un réseau de téléphonie. En outre, dans l'invention, l'annuaire 21 est muni d'une liste d'identifiant d'appareils, cette liste étant associée aux numéros d'accès au réseau auxquels sont reliés ces appareils. Ainsi, chaque réseau forme un groupe d'appareils dont un identifiant est regroupé dans une même liste. Cette organisation de l'annuaire 21 permet de réduire un encombrement de la mémoire 5 par rapport à une solution où chaque appareil est associé à un identifiant de réseau. Une liste d'identifiants dans l'annuaire 21 est mise à jour en fonction d'une information de mise à jour émise à partir du réseau de téléphonie associé. Cette information de mise à jour permet notamment d'indiquer quels sont les appareils accessibles à partir du réseau considéré et permet ainsi au serveur 1 de savoir si une demande d'appel en provenance du réseau 8 peut toujours être acheminée ou non vers le réseau considéré.

Ainsi, dans un fonctionnement normal du serveur 1 selon l'invention, celui-ci reçoit dans un message relatif à une demande d'appel adressée au serveur un identifiant d'un appareil à contacter. Il s'agit par exemple du téléphone 14 qui demande l'établissement d'une communication avec le téléphone 22 du réseau 9 à travers le réseau 8. Dans ce cas, le serveur 12 reçoit cette demande du serveur 16 dans un message de données. Cette demande est transmise au serveur 1 par l'intermédiaire de la liaison 13. Le serveur 1 reçoit donc l'identifiant du téléphone 22 par exemple un numéro de téléphone. Le microprocesseur 2 recherche alors dans l'annuaire 21 si cet identifiant est présent. Dans l'affirmative, le microprocesseur 2 détermine à quel réseau de téléphonie est associé le téléphone 22, c'est-à-dire ici le réseau 9. Le microprocesseur 2 commande alors l'interface 7 pour établir une connexion entre le lien 13 et le lien 11 qui relie l'interface 7 au réseau 9. L'interface 10 reçoit alors cette demande d'appel et la transmet à un central 23 de gestion des communications du réseau 9 afin de faire acheminer cette demande d'appel jusqu'au téléphone 22.

De même, si le téléphone 22 souhaite établir une communication avec le téléphone 14 à travers le réseau 8 alors ce téléphone 22 établit une communication avec le serveur 1 en envoyant au central 23 l'identifiant du serveur 1. On pourrait envisager que le téléphone 22 n'envoie au central 23 que l'identifiant de l'interface 10 qui elle ne serait reliée qu'avec le serveur 1. Ainsi, lorsque l'interface 10 reçoit une requête d'un téléphone alors elle établit une communication avec l'interface 7 dont elle connaît une valeur de l'identifiant. Cette valeur est par exemple sauvegardée par l'interface 10 dans une mémoire de sauvegarde non représentée. Cependant, on peut envisager que l'interface 10 soit destinée à être reliée à un deuxième serveur ou à tout autre système voire réseau. En conséquence, on envoie l'identifiant du serveur 1 au circuit central 23 via l'interface 10 par exemple.

Dans un exemple de mise en oeuvre de l'invention, le réseau 9 est un réseau de téléphonie mobile de type GSM, le réseau 18 est un réseau de téléphonie fixe ou encore RTC (pour Réseau Téléphonique Commuté). Cependant, il peut aussi s'agir d'un réseau 24 de téléphonie mobile selon la norme DECT (pour Digital European Cordless Telephony en anglais). Dans le réseau 24, un téléphone, par exemple un téléphone 25, est relié radio électriquement à une base 26. Cette base 26 peut être reliée directement à l'interface 7 et formant ainsi un lien 27 soit indirectement par l'intermédiaire d'une interface 28 entre le lien 27 et la base 26. Dans le cas où la base 26 est reliée directement à l'interface 7, cela signifie en fait que la base 26 est munie, en interne, d'une interface telle que l'interface 28. Ainsi, selon l'invention, chaque réseau 9, 18 et 24 est associé avec une liste d'identifiants dans l'annuaire 21.

Dans un exemple préféré, le réseau 8 est un réseau de transmission de données selon un format IP (pour Internet Protocol en anglais c'est-à-dire protocole Internet) dont le plus connu est le réseau Internet. Cependant, il pourrait très bien s'agir d'un format selon le protocole ATM (Asynchronus Transfert Mode pour mode de transfert asynchrone) ou relais de trame (frame relay en anglais) ou tout autre protocole permettant de transporter des données de voix. Ainsi, une communication entre le serveur 1 et le serveur 12 est réalisé en utilisant le protocole IP. De même, les communications entre, d'une part, les interfaces 19, 23 et 28 et d'autre part l'interface 7 se font par un échange de données au format IP ou plus généralement au format utilisé par le réseau 8. Dans un exemple préféré, le serveur 1 comporte une liste de protocoles lui permettant de pouvoir être connecté à différents réseaux de transmission de données. Cela a pour conséquence de banaliser la réalisation de l'interface 7 qui ne connaît donc qu'un seul langage de communication, le langage IP dans cet exemple. En conséquence, le rôle de l'interface 7 se réduit essentiellement à des fonctions de commutation.

En outre, les téléphones des réseaux 9, 18 et 24 sont munis d'un programme de gestion d'une communication à travers le réseau 8. Ce programme de gestion permet notamment, lorsqu'il est validé, de transformer une demande d'appel vers le téléphone 14 par exemple en un message d'appel à destination du serveur 1, ce message comportant l'identifiant ou plus simplement le numéro de téléphone, du téléphone 14.

Dans une variante, on pourrait envisager que l'utilisateur du téléphone 22 par exemple compose le numéro lui permettant d'accéder au serveur 1 et que le programme 3 mette en oeuvre une procédure interactive avec le téléphone 22 afin que celui-ci envoie un deuxième numéro au serveur 1, ce deuxième numéro étant celui du téléphone 14.

Les réseaux 9, 18, 24 voire le réseau 15 sont dans un exemple préféré des réseaux locaux c'est-à-dire des réseaux permettant de répondre à des besoins de téléphonie dans un volume restreint par exemple un immeuble d'entreprise voire un groupe d'immeubles. En conséquence, les réseaux 9, 18 et 24 peuvent être des réseaux identiques c'est-à-dire utilisant une même technologie et ou une même norme par exemple DECT et permet ainsi de définir des sous-groupes d'utilisateurs dans un même immeuble par exemple. On crée ainsi un sous-groupe associé à un premier département, un autre sous-groupe associé à un deuxième département et ainsi de suite. En conséquence, un utilisateur qui passerait avec son téléphone d'une zone de couverture associée à un premier réseau à une zone de couverture associée à un deuxième réseau verra son déplacement, ou plutôt celui du téléphone, géré par le serveur 1. En effet, après son déplacement, le réseau 9 par exemple indiquera au serveur 1 l'arrivée d'un nouveau téléphone dans sa zone de couverture et mettra ainsi à jour la liste de l'annuaire 21 associée au réseau 9. La liste d'identifiants associée au réseau d'origine sera en outre elle aussi mise à jour en supprimant l'identifiant en question de cette liste. Ce déplacement est transparent pour un serveur en amont du serveur 1 par exemple le serveur 12.

Selon un fonctionnement normal du réseau 8, lorsqu'une requête, c'est-à-dire un message d'appel, à destination du serveur 1 n'aboutit pas alors le message d'appel est transmis à un autre serveur afin de se connecter éventuellement avec une autre passerelle et ainsi de localiser le réseau auquel est associé l'appelé. En outre, les liens 11, 13, 20 et 27 sont des liens habituellement employés afin de réaliser des liaisons de transmission de données telles que de la fibre optique, du câble coaxial, de la paire torsadée ou tout autre support. Cependant, une condition à respecter est que le support utilisé autorise une transmission à un débit voulu. Un débit utile à travers les liens 11, 20 et 27 dépend notamment du nombre d'appareil de téléphonie associé à chaque réseau 9, 18 et 24 respectivement et donc dépend du contexte dans lequel est implanté le serveur 1 de l'invention. De même, le lien 13 ne peut être dimensionné qu'en fonction d'une estimation des besoins et donc du nombre d'appareils de téléphonie que le serveur 1 peut gérer à travers les réseaux auxquels il est relié. Dans l'invention, le réseau 8 est un réseau de transmission de données selon un format IP mais, vu que les réseaux 9, 15, 18 et 24 sont des réseaux de téléphonie alors, de manière préférée, le réseau 8 permet de transporter une information de voix sous un format IP. Il s'agit donc là d'un réseau IP adapté à la voix, ce réseau étant superposé au réseau Internet puisque le support ne change pas seul la mise en oeuvre de la transmission change. On connaît pour cela des normes telles que la norme H323 notamment qui permet de faire de la téléphonie à travers un réseau IP.

## Revendications

1. Passerelle serveur (1) de données, **caractérisée en ce que**, lors d'une demande d'appel, elle est connectée d'une part à un réseau (8) de transmission de données et d'autre part à un réseau (9) de téléphonie mobile par l'intermédiaire d'une interface (10), cette passerelle comportant des moyens de commutation permettant d'assurer des fonctions de commutations et comportant un annuaire (21) permettant de déterminer à quel réseau de téléphonie un appareil de téléphonie est associé.

2. Passerelle selon la revendication 1, **caractérisée en ce qu'**elle comporte des moyens de mise à jour de l'annuaire, à partir d'informations de mise à jour provenant d'un réseau de téléphonie.

3. Procédé d'établissement d'une communication, à travers un réseau (8) de transmission de données, à destination ou en provenance d'un appareil d'un réseau (9) de téléphonie **caractérisé en ce que**
- on relie le réseau de transmission de données et un réseau (9, 18, 24) de téléphonie, dont le premier réseau, à une passerelle serveur (1) de données,
- on identifie la passerelle serveur par un numéro d'accès, ce numéro d'accès étant le seul connu par le réseau de transmission,
- on identifie, dans la passerelle serveur, un réseau de téléphonie par un numéro d'accès servant d'identifiant de ce réseau, le réseau étant identifié par un numéro d'accès,
- on mémorise, dans une mémoire (5) de sauvegarde de la passerelle serveur, un annuaire permettant d'établir une liaison avec un appareil, l'annuaire permettant au moins d'associer un identifiant de l'appareil et le numéro d'accès du réseau de téléphonie auquel il est relié.

4. Procédé selon la revendication 3, **caractérisé en ce que**
- on munit l'annuaire d'une liste d'identifiants d'appareils, cette liste étant associée au numéro d'accès au réseau auquel sont reliés ces appareils.

5. Procédé selon la revendication 4, **caractérisé en ce que**
- on met à jour une liste d'identifiants en fonction d'une information de mise à jour émise à partir du réseau de téléphonie associé, cette information de mise à jour permettant notamment d'indiquer les appareils accessibles à partir de ce réseau.

6. Procédé selon l'une quelconque des revendications 4 et 5, **caractérisé en ce que** :
- on reçoit, dans un message relatif à une demande d'appel adressé au serveur, un identifiant d'un appareil à contacter,
- on transmet la demande d'appel au réseau de téléphonie associé à cet identifiant, le message étant transmis au réseau de transmission si cet identifiant n'appartient à aucune liste d'identifiants de l'annuaire.

## Patentansprüche

1. Datenserver (1) gateway, **dadurch gekennzeichnet, dass** dieses bei einer Rufanfrage einerseits mit einem Datenübertragungsnetz (8) und andererseits mit einem Mobiltelefonnetz (9) über eine Schnittstelle (10) verbunden wird, wobei dieses Gateway Schaltmittel zum Ausführen von Schaltaufgaben und ein Verzeichnis (21) zum Feststellen, welchem Telefonnetz ein Telefongerät zugeordnet ist, umfasst.

2. Gateway nach Anspruch 1, **dadurch gekennzeichnet, dass** es Mittel zur Aktualisierung des Verzeichnisses umfasst, wobei diese Aktualisierung aufgrund von aus einem Telefonnetz stammenden Aktualisierungsdaten vorgenommen wird.

3. Verfahren zum Herstellen einer Verbindung über ein Datenübertragungsnetz (8) mit oder ausgehend von einem Gerät eines Telefonnetzes (9), **dadurch gekennzeichnet, dass**
- das Datenübertragungsnetz und ein Telefonnetz (9, 18, 24) einschließlich dem ersten Netz mit einem Datenserver (1) gateway verbunden wird,
- das Servergateway über eine Zugangsnummer identifiziert wird, wobei diese Zugangsnummer die einzige ist, die dem Übertragungsnetz bekannt ist,
- im Servergateway ein Telefonnetz über eine als Identifikationsnummer für dieses Telefonnetz dienende Zugangsnummer identifiziert wird, wobei dieses Netz über eine Zugangsnummer identifiziert wird,
- in einem Back-up-Speicher (5) des Servergateways ein Verzeichnis gespeichert wird, mit dem eine Verbindung zu einem Gerät hergestellt werden kann, wobei das Verzeichnis mindestens dazu dient, einen Identifier des Geräts und die Zugangsnummer des Telefonnetzes, mit dem dieses Gerät verbunden ist, einander zuzuordnen.

4. Verfahren nach Anspruch 3, **dadurch gekennzeichnet, dass**
- das Verzeichnis mit einer Liste von Identifiern zur Identifizierung von Geräten versehen wird, wobei diese Liste der Zugangsnummer des Netzes, mit dem diese Geräte verbunden sind, zugeordnet ist.

5. Verfahren nach Anspruch 4, **dadurch gekennzeichnet, dass**
- eine Liste von Identifiern aufgrund von Aktualisierungsdaten aktualisiert wird, welche vom zugeordneten Telefonnetz gesendet werden, wobei diese Aktualisierungsdaten insbesondere dazu dienen, die Geräte anzugeben, die von diesem Netz aus zugänglich sind.

6. Verfahren nach einem der Ansprüche 4 und 5, **dadurch gekennzeichnet, dass**
- in einer in Verbindung mit einer Rufanfrage an den Server gerichteten Nachricht ein Identifier eines zu kontaktierenden Geräts angegeben wird,
- die Rufanfrage an das diesem Identifier zugeordnete Telefonnetz übermittelt wird, wobei die Nachricht an das Übertragungsnetzwerk übermittelt wird, wenn dieser Identifier in keiner der in dem Verzeichnis aufgeführten Listen von Identifiern vorkommt.

## Claims

1. A data server (1) gateway **characterized in that**, in the event of a call request, said gateway is connected to a data transmission network (8) on the one side and to a mobile telephone network (9) on the other side via an interface (10), said gateway being provided with switching means for performing switching tasks and with a directory (21) for determining to which telephone network a telephone device is associated.

2. The gateway according to claim 1, **characterized in that** it is provided with means for updating the directory using updating information obtained from a telephone network.

3. A method of establishing, through a data transmission network (8), a connection with or from a device of a telephone network (9), **characterized in that**
- the data transmission network and a telephone network (9, 18, 24), including the first network, are connected to a data server (1) gateway,
- the server gateway is identified by means of an access number, said access number being the only one known to the transmission network,
- a telephone network is identified in the server gateway by means of an access number serving as an identifier of said network, the network being identified by means of an access number,
- a directory for establishing a connection with a device is stored in a back-up memory (5) of the server gateway, said directory at least serving to associate a device identifier with the access number of the telephone network to which it is connected.

4. The method according to claim 3, **characterized in that**
- the directory is provided with a list of device identifiers, said list being associated to the access number of the network to which said devices are connected.

5. The method according to claim 4, **characterized in that**
- an identifier list is updated according to an updating information sent by the associated telephone network, said updating information more specifically serving to indicate the devices that may be accessed from this network.

6. The method according to any of the claims 4 and 5, **characterized in that**
- a message relating to a call request sent to the server communicates an identifier of a device to be contacted,
- the call request is transmitted to the telephone network associated with said identifier, the message being transmitted to the transmission network if said identifier does not belong to any identifier list in the directory.
